# EUROPEAN PATENT APPLICATION

(11) **EP 4 431 280 A1**
(43) Date of publication of application: **18.09.2024**
(21) Application number: 22892873.5
(22) Date of filing: 10.11.2022
(51) Int. Cl.: B32B 27/36, B32B 27/10, B65D 65/40

(54) **MULTILAYER BODY AND USE OF SAME**

(30) Priority: 12.11.2021 JP 2021184866
(71) Applicant: Kaneka Corporation, Osaka-shi, Osaka 530-8288 (JP)
(72) Inventor: OKADA, Yasunori, Settsu-shi, Osaka 566-0072 (JP); MURASHIMA, Kensuke, Settsu-shi, Osaka 566-0072 (JP); KUBOTA, Tomofumi, Settsu-shi, Osaka 566-0072 (JP)
(74) Representative: Vossius & Partner Patentanwälte Rechtsanwälte mbB
(86) International application number: PCT/JP2022/041971
(87) International publication number: WO 2023/085375

(57) **Abstract**

A laminated article includes at least a substrate layer and a sealant layer. The sealant layer is located on at least one outermost side of the laminated article, and the sealant layer is a resin layer containing a polyhydroxyalkanoate resin component. In differential scanning calorimetry of the polyhydroxyalkanoate resin component, a highest melting peak temperature is 130°C or higher, and a total crystalline melting enthalpy calculated from all melting peaks is in a range of 20 to 65 J/g.

## Description

### Technical Field

The present invention relates to: a laminated article including a substrate layer and a sealant layer containing a polyhydroxyalkanoate resin component; a packaging material including the laminated article; and a container including the laminated article.

### Background Art

A huge amount of packaging materials or containers made of petroleum-based plastics are discharged as waste every year. The huge amount of waste has brought about the problems of a shortage of landfill sites and environmental pollution, and these problems have become a serious concern. In addition, microplastics have recently caused significant harm to the marine environment, and there is a demand for widespread use of biodegradable plastics which are degradable in the natural environment.

Various kinds of such biodegradable plastics are known. Poly(3-hydroxybutyrate) resins are thermoplastic polyesters produced and accumulated as energy storage substances in the cells of many kinds of microorganisms, and these resins are biodegradable in seawater as well as in soil and thus are attracting attention as materials that can be a solution to the above-mentioned problems (Patent Literature 1).

A laminated article including a biodegradable substrate such as paper and a layer of poly(3-hydroxybutyrate) resin that serves as a water-resistant layer, an oil-resistant layer, or a sealant layer is produced by forming the layer of poly(3-hydroxybutyrate) resin on the substrate by a lamination process. Such a laminated article is very promising in terms of environmental protection because both the resin and the substrate have excellent biodegradability.

### Citation List

### Patent Literature

PTL 1: Japanese Laid-Open Patent Application Publication No. 2017-132967

### Summary of Invention

### Technical Problem

When a laminated article including a substrate layer such as paper and a plastic sealant layer formed on the substrate layer is subjected to secondary processing to process the laminated article into a packaging material such as a bag, a container such as a paper cup or paper tray, or a container lid, the secondary processing generally involves the step of folding the laminated article by means of a bag making machine or a mold. It is desired that a sealant layer formed using a poly(3-hydroxybutyrate) resin component should not be cracked in the folding step.

The processing properties and mechanical properties of poly(3-hydroxybutyrate-co-3-hydroxyhexanoate), which is a copolymer of poly(3-hydroxybutyrate) resin, can be flexibly controlled by changing the proportion of 3-hydroxyhexanoate. However, increasing the proportion of 3-hydroxyhexanoate tends to cause a reduction in oil resistance although the increased proportion of 3-hydroxyhexanoate leads to reduced crystallinity and hence improved mechanical properties. Thus, it has been difficult to obtain a laminated article satisfactory in both crack resistance and oil resistance which are required of packaging materials or containers.

In view of the above circumstances, the present invention aims to provide a laminated article including a substrate layer such as paper and a sealant layer, the sealant layer being formed using a polyhydroxyalkanoate resin which is a resin having excellent biodegradability such as degradability in seawater, the laminated article having both high oil resistance and high crack resistance.

### Solution to Problem

As a result of intensive studies with the goal of solving the above problem, the present inventors have found that the problem can be solved by forming a sealant layer using a polyhydroxyalkanoate resin component that meets the following requirements: in differential scanning calorimetry of the polyhydroxyalkanoate resin component, the highest melting peak is observed at 130°C or higher, and a total crystalline melting enthalpy calculated from all melting peaks is in a given range. Based on this finding, the inventors have completed the present invention.

Specifically, the present invention relates to a laminated article including at least:
a substrate layer; and
a sealant layer, wherein
the sealant layer is located on at least one outermost side of the laminated article,
the sealant layer is a resin layer containing a polyhydroxyalkanoate resin component, and
in differential scanning calorimetry of the polyhydroxyalkanoate resin component, a highest melting peak temperature is 130°C or higher, and a total crystalline melting enthalpy calculated from all melting peaks is in a range of 20 to 65 J/g.

### Advantageous Effects of Invention

The present invention can provide a laminated article including a substrate layer such as paper and a sealant layer, the sealant layer being formed using a polyhydroxyalkanoate resin which is a resin having excellent biodegradability such as degradability in seawater, the laminated article having both high oil resistance and high crack resistance.

### Brief Description of Drawings

FIG. 1 shows a DSC curve measured for a polyhydroxyalkanoate resin component obtained in Example 6 and further shows a melting peak temperature and a crystalline melting enthalpy which are calculated from the DSC curve.
FIG. 2 is a conceptual diagram illustrating a pressing process performed using a hand press machine to evaluate crack resistance in Examples and Comparative Examples; (A) is a vertical cross-sectional view before the process and (B) is a vertical cross-sectional view after the process.
FIG. 3 is a schematic diagram showing the shape of a laminated article subjected to a pressing process performed using a hand press machine to evaluate crack resistance in Examples and Comparative Examples; (A) is a vertical cross-sectional view and (B) is a top view.

### Description of Embodiments

Hereinafter, an embodiment of the present invention will be described. The present invention is not limited to the embodiment described below.

### (Laminated Article)

A laminated article according to the present embodiment includes, at least, a substrate layer and a sealant layer. A gas barrier layer may be located between the substrate layer and the sealant layer. The sealant layer is located on at least one outermost side of the laminated article so that different portions of the sealant layer may be brought into contact by, for example, folding the laminated article and heat-sealed together. The layers other than the sealant layer are not limited to particular locations. The substrate layer, the gas barrier layer, and the sealant layer may be arranged in this order. Alternatively, the gas barrier layer, the substrate layer, and the sealant layer may be arranged in this order.

An adhesive layer may be formed between the adjacent layers to bond the layers to each other, or the layers may be placed directly on each other without any adhesive layer.

A printed layer may be formed on the opposite side of the laminated article from the sealant layer. A protective layer may be formed on the printed layer to protect the printed layer. A printed layer may be located between the substrate layer and the sealant layer. Hereinafter, each of the layers will be described.

### (Substrate Layer)

The substrate layer is not limited to a particular type and may be any layer on which the gas barrier layer and the sealant layer can be placed. In terms of enhancing the biodegradability of the laminated article as a whole, the substrate layer is preferably a biodegradable layer. Examples of the biodegradable substrate layer include, but are not limited to, a layer of paper (whose main component is cellulose), a layer of cellophane, a layer of cellulose ester, a layer of polyvinyl alcohol, a layer of polyamino acid, a layer of polyglycolic acid, and a layer of pullulan. A layer of paper or cellophane is preferred because such a layer has high heat resistance and is inexpensive, and a layer of paper is particularly preferred. The paper is not limited to a particular type, and the type of the paper can be selected as appropriate depending on the intended use of the laminated article. Specific examples of the paper include cup paper, unbleached kraft paper, treated kraft paper such as bleached kraft paper or single-sided glossy kraft paper, high-quality paper, coated paper, tissue paper, glassine paper, and paperboard. The paper may contain an additive which is added as necessary, such as a waterproofing agent, a water repellent, or an inorganic substance.

The substrate layer may be one subjected to a surface treatment such as corona treatment, plasma treatment, flame treatment, or anchor coat treatment in advance. One of such surface treatments may be performed alone, or two or more surface treatments may be used in combination.

### (Sealant Layer)

The sealant layer is a resin layer containing a polyhydroxyalkanoate resin component including at least one polyhydroxyalkanoate resin (hereinafter also referred to as "PHA resin"). In differential scanning calorimetry of the polyhydroxyalkanoate resin component, a highest melting peak temperature is 130°C or higher, and a total crystalline melting enthalpy calculated from all melting peaks is in the range of 20 to 65 J/g. The sealant layer may further contain a resin component other than the PHA resin component.

### (PHA Resin Component)

The PHA resin component may consist of a single PHA resin or may be a combination of two or more PHA resins. Examples of the PHA resin component include a polymer having 3-hydroxyalkanoate structural units (monomer units) and/or 4-hydroxyalkanoate structural units which are degradable in seawater. In particular, a polymer containing 3-hydroxyalkanoate structural units represented by the following formula (1) is preferred.

[-CHR-CH₂-CO-O-] (1)

In the formula (1), R is an alkyl group represented by CₚH₂ₚ₊₁, and p is an integer from 1 to 15. Examples of the R group include linear or branched alkyl groups such as methyl, ethyl, propyl, methylpropyl, butyl, isobutyl, t-butyl, pentyl, and hexyl groups. The integer p is preferably from 1 to 10 and more preferably from 1 to 8.

It is particularly preferable for the PHA resin component to include a microbially produced PHA resin. In the microbially produced PHA resin, all of the 3-hydroxyalkanoate structural units are contained as (R)-3-hydroxyalkanoate structural units.

The PHA resin component preferably contains 50 mol% or more 3-hydroxyalkanoate structural units (in particular, the structural units represented by the formula (1)) in the total structural units, and the content of the 3-hydroxyalkanoate structural units is more preferably 60 mol% or more and even more preferably 70 mol% or more. The PHA resin may contain only one type or two or more types of 3-hydroxyalkanoate structural units as structural units or may contain other structural units (such as 4-hydroxyalkanoate structural units) in addition to the one type or two or more types of 3-hydroxyalkanoate structural units.

It is preferable for the PHA resin component to include a PHA resin containing 3-hydroxybutyrate (hereinafter also referred to as "3HB") structural units. In particular, all of the 3-hydroxybutyrate structural units are preferably (R)-3-hydroxybutyrate structural units.

Specific examples of the PHA resin include poly(3-hydroxybutyrate), poly(3-hydroxybutyrate-co-3 -hydroxypropionate), poly(3 -hydroxybutyrate-co-3 -hydroxyvalerate) abbreviated as "P3HB3HV", poly(3-hydroxybutyrate-co-3-hydroxyvalerate-3-hydroxyhexanoate), poly(3-hydroxybutyrate-co-3-hydroxyhexanoate) abbreviated as "P3HB3HH", poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) abbreviated as "P3HB4HB". The way of copolymerization is not limited to a particular type, and may be random copolymerization, alternating copolymerization, block copolymerization, or graft copolymerization and is preferably random copolymerization. In terms of factors such as processing properties and mechanical properties, P3HB3HH and P3HB4HB are preferred, and P3HB3HH is particularly preferred. P3HB3HH has the following advantages: the ratio between the constituent monomers can be varied to change the melting point and crystallinity and thus adjust the physical properties such as the Young's modulus and heat resistance to levels intermediate between those of polypropylene and polyethylene; and P3HB3HH is easy to industrially produce. Additionally, P3HB3HH can have a low melting point and be heat-sealed at a relatively low temperature. Thus, the use of P3HB3HH makes it possible to prevent the substrate layer from discoloring due to heat during heat sealing.

When the PHA resin component includes a PHA resin containing 3-hydroxybutyrate structural units, the average content ratio between 3-hydroxybutyrate and another monomer (3-hydroxybutyrate/another monomer) in the total PHA resin component is preferably from 94/6 to 70/30 (mol%/mol%), more preferably from 92/8 to 80/20 (mol%/mol%), and even more preferably from 90/10 to 85/15. When the average content of 3-hydroxybutyrate is 94 mol% or less, sufficient mechanical properties are likely to be achieved. When the average content of 3-hydroxybutyrate is 70% or more, the resin is likely to exhibit a high crystallization speed by virtue of which a practical level of solidification speed can be achieved during formation or heat sealing of the sealant layer.

The average content ratio between monomers in the total PHA resin component can be determined by a method known to those skilled in the art, such as a method described in paragraph [0047] of WO 2013/147139. The average content ratio refers to a molar ratio between 3-hydroxybutyrate and another monomer contained in the total PHA resin component. When the polyhydroxyalkanoate resin component is a mixture of two or more polyhydroxyalkanoate resins, the average content ratio refers to a molar ratio between monomers contained in the total mixture.

The weight-average molecular weight of the PHA resin component is not limited to a particular range, but is preferably from 10 × 10⁴ to 150 × 10⁴, more preferably from 15 × 10⁴ to 100 × 10⁴, and even more preferably from 20 × 10⁴ to 70 × 10⁴. If the weight-average molecular weight is less than 10 × 10⁴, the mechanical properties of the resulting polyhydroxyalkanoate resin component tend to deteriorate. If the weight-average molecular weight is more than 150 × 10⁴, the load imposed on a machine during melt processing tends to be high, and the productivity tends to decline.

When the PHA resin component is a mixture of two or more PHA resins, the weight-average molecular weight of each PHA resin is not limited to a particular range. However, when, for example, high-crystallinity and low-crystallinity PHA resins as described later are blended, the weight-average molecular weight of the high-crystallinity polyhydroxyalkanoate resin is preferably from 20 × 10⁴ to 100 × 10⁴, more preferably from 25 × 10⁴ to 70 × 10⁴, and even more preferably from 30 × 10⁴ to 65 × 10⁴. If the weight-average molecular weight of the high-crystallinity PHA resin is less than 20 × 10⁴, the mechanical properties of the resulting PHA resin component tend to deteriorate. If the weight-average molecular weight is more than 100 × 10⁴, heat sealability tends to decline due to a high viscosity during melting. The weight-average molecular weight of the low-crystallinity PHA resin is preferably from 10 × 10⁴ to 150 × 10⁴, more preferably from 15 × 10⁴ to 100 × 10⁴, and even more preferably from 20 × 10⁴ to 70 × 10⁴. If the weight-average molecular weight of the low-crystallinity PHA resin is less than 10 × 10⁴, the mechanical properties of the resulting PHA resin component tend to deteriorate. If the weight-average molecular weight is more than 150 × 10⁴, the processability tends to decline due to an inability to achieve a sufficient crystallization speed.

The weight-average molecular weight of the PHA resin component or a PHA resin included in the PHA resin component can be measured as a polystyrene-equivalent molecular weight by gel permeation chromatography (HPLC GPC system manufactured by Shimadzu Corporation) using a chloroform solution of the PHA resin component or the PHA resin. The column used in the gel permeation chromatography may be any column suitable for weight-average molecular weight measurement and may be, for example, a polystyrene gel column ("Shodex K-804" manufactured by Showa Denko K.K.).

The method for PHA resin production is not limited to using a particular technique and may be a production method using chemical synthesis or a microbial production method. A microbial production method is preferred. The microbial production method used can be any known method. Known examples of bacteria that produce copolymers of 3-hydroxybutyrate with other hydroxyalkanoates include *Aeromonas caviae* which is a P3HB3HV- and P3HB3HH-producing bacterium and *Alcaligenes eutrophus* which is a P3HB4HB-producing bacterium. In particular, *Alcaligenes eutrophus* AC32 (FERM BP-6038; see T. Fukui, Y. Doi, J. Bacterial., 179, pp. 4821-4830 (1997)) having a poly(3-hydroxyalkanoate) resin synthase gene introduced is known to be effective to increase the P3HB3HH productivity. Such a microorganism is cultured under suitable conditions to allow the microorganism to accumulate P3HB3HH in its cells, and the microbial cells accumulating P3HB3HH are used. Instead of the above microorganism, a genetically modified microorganism having any suitable PHA resin synthesis-related gene introduced may be used depending on the PHA resin to be produced. The culture conditions including the type of the substrate may be optimized depending on the PHA resin to be produced. For example, a PHA resin can be produced by a method described in WO 2010/013483. Examples of commercially-available P3HB3HH include "Kaneka Biodegradable Polymer Green Planet^{™}" of Kaneka Corporation.

### (Melting Behavior of PHA Resin Component)

In differential scanning calorimetry of the PHA resin component, a highest melting peak temperature is 130°C or higher. The highest melting peak temperature is preferably from 130 to 165°C, more preferably from 135 to 160°C, and even more preferably from 140 to 155°C. If the highest melting peak temperature is below 130°C, the crystallinity of the PHA resin component is extremely low, and the sealant layer has insufficient oil resistance.

During heat sealing, crystals of this melting-point component do not completely melt but remain and act as crystal nuclei to accelerate the solidification of the sealant layer. If there is a melting peak temperature in a temperature region above 165°C, the amount of remaining crystal nuclei of the high-melting-point resin component is extremely large, and the heat sealability declines. Increasing the heat sealing temperature to moderate the amount of remaining crystal nuclei could cause significant thermal decomposition of the resin, with the result that the sealant layer could have a reduced mechanical strength leading to a reduced heat seal strength.

The highest melting peak temperature exhibited by the PHA resin component is measured as the highest of temperatures at which melting peaks appear in a DSC curve obtained by differential scanning calorimetry which uses a differential scanning calorimeter (DSC 25 manufactured by TA Instruments) and in which about 2 mg of the PHA resin component is heated from -30 to 180°C at a temperature increase rate of 10°C/min.

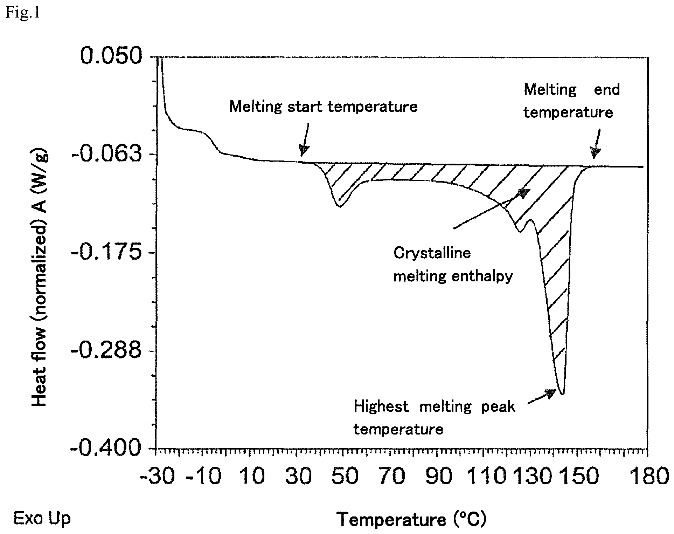

As shown in the DSC curve of FIG. 1, the PHA resin component may have, in addition to the highest-temperature melting peak, another melting peak in a temperature region below the temperature at which the highest-temperature melting peak is located. For example, the PHA resin component may have a melting peak at a temperature of 100°C or lower.

In differential scanning calorimetry of the PHA resin component, a total crystalline melting enthalpy calculated from all melting peaks is in the range of 20 to 65 J/g. When the total crystalline melting enthalpy is in this range, the crystallinity of the polyhydroxyalkanoate resin component can be reduced to a suitable level, and the sealant layer can have desired levels of both crack resistance and oil resistance. The total crystalline melting enthalpy is preferably from 30 to 64 J/g and more preferably from 55 to 64 J/g.

The total crystalline melting enthalpy calculated from all melting peaks refers to the sum of the crystalline melting enthalpies of the melting peaks. Specifically, in a DSC curve obtained as described above, baselines observed before the start of melting and after the end of melting are connected by a straight line, and the total crystalline melting enthalpy is calculated as the area of the melting zone surrounded by the straight line and the DSC curve (hatched zone in FIG. 1).

### (Method for Producing PHA Resin Component)

Examples of the method for producing the polyhydroxyalkanoate resin component that exhibits the melting behavior described above include: a method which is used when the PHA resin in the component is a copolymer and in which the copolymerization ratio between the monomers constituting the copolymer is adjusted appropriately; a method in which a component other than PHA resins, such as a plasticizer, is added; and a method in which at least two PHA resins differing in melting behavior are mixed. In particular, the method is preferred in which at least two PHA resins differing in melting behavior are mixed. Specifically, it is preferable to mix at least two PHA resins each of which exhibits a different crystalline melting enthalpy. In this case, it is easy to ensure that in differential scanning calorimetry of the PHA resin component, the highest melting peak temperature is 130°C or higher and the total crystalline melting enthalpy calculated from all melting peaks is in the range of 20 to 65 J/g.

When at least two PHA resins are mixed, the at least two PHA resins preferably include a combination of at least one high-crystallinity PHA resin and at least one low-crystallinity PHA resin. Specifically, it is preferable to mix two or more PHA resins differing in the contents of monomer units. In general, high-crystallinity PHA resins are superior in processability and oil resistance but low in mechanical strength such as crack resistance, while low-crystallinity PHA resins are inferior in oil resistance but have good mechanical properties. The combined use of a high-crystallinity PHA resin and a low-crystallinity PHA resin allows the resulting PHA resin component to excel in both processability and mechanical properties.

When the high-crystallinity PHA resin contains 3-hydroxybutyrate structural units, the average 3-hydroxybutyrate structural unit content in the high-crystallinity PHA resin is preferably higher than the average 3-hydroxybutyrate structural unit content in the total PHA resin component. When the high-crystallinity PHA resin contains 3-hydroxybutyrate and another monomer, the average content ratio between 3-hydroxybutyrate and the other monomer (3-hydroxybutyrate/other monomer) in the high-crystallinity resin is preferably from 90/10 to 99/1 (mol%/mol%).

The high-crystallinity PHA resin component is preferably poly(3-hydroxybutyrate-co-3-hydroxyhexanoate) or poly(3-hydroxybutyrate-co-4-hydroxybutyrate). When the high-crystallinity PHA resin is poly(3-hydroxybutyrate-co-3-hydroxyhexanoate), the average 3-hydroxyhexanoate structural unit content in the resin is preferably from 1 to 6 mol%.

When the PHA resin component contains 3-hydroxybutyrate structural units, the average 3-hydroxybutyrate structural unit content in the low-crystallinity PHA resin is preferably lower than the average 3-hydroxybutyrate structural unit content in the total PHA resin component. When the low-crystallinity PHA resin contains 3-hydroxybutyrate and another monomer, the average content ratio between 3-hydroxybutyrate and the other monomer (3-hydroxybutyrate/other monomer) in the low-crystallinity resin is preferably from 80/20 to 0/100 (mol%/mol%).

The low-crystallinity PHA resin is preferably poly(3-hydroxybutyrate-co-3-hydroxyhexanoate) or poly(3-hydroxybutyrate-co-4-hydroxybutyrate). When the low-crystallinity PHA resin is poly(3-hydroxybutyrate-co-3-hydroxyhexanoate), the average 3-hydroxyhexanoate structural unit content in the resin is preferably 24 mol% or more, more preferably from 24 to 99 mol%, and even more preferably from 24 to 50 mol%.

When the high-crystallinity and low-crystallinity PHA resins described above are used in combination, the proportions of the two resins in their mixture are not limited to particular ranges. Preferably, the proportion of the high-crystallinity PHA resin is from 50 to 80 wt%, and the proportion of the low-crystallinity PHA resin is from 20 to 50 wt%. More preferably, the proportion of the high-crystallinity PHA resin is from 60 to 70 wt%, and the proportion of the low-crystallinity PHA resin is from 30 to 40 wt%.

The method for blending two or more PHA resins is not limited to using a particular technique. A blend of two or more PHA resins may be obtained by producing the resins together in a microorganism or may be obtained by chemical synthesis. A blend of two or more resins may be obtained by melting and kneading the resins using a device such as an extruder, a kneader, a Banbury mixer, or a roll mill or may be obtained by dissolving and mixing the resins in a solvent and drying the resulting mixture.

### (Additional Resins)

The sealant layer may contain one additional resin or two or more additional resins in addition to the PHA resin component to the extent that the effect of the invention is achieved. Examples of such additional resins include: aliphatic polyester resins such as polybutylene succinate adipate, polybutylene succinate, polycaprolactone, and polylactic acid; and aliphatic-aromatic polyester resins such as polybutylene adipate terephthalate, polybutylene sebacate terephthalate, and polybutylene azelate terephthalate.

The amount of the additional resin(s) is not limited to a particular range and may vary to the extent that the effect of the invention is achieved. The amount of the additional resin(s) is preferably 30 parts by weight or less and more preferably 20 parts by weight or less per 100 parts by weight of the PHA resin component. The lower limit of the amount of the additional resin(s) is not limited to a particular value, and the amount of the additional resin(s) may be 0 part by weight.

### (Additives)

The sealant layer may contain additives commonly used in the art to the extent that the effect of the invention is achieved. Examples of such additives include: inorganic fillers such as talc, calcium carbonate, mica, silica, titanium oxide, and alumina; organic fillers such as chaff, wood powder, waste paper (e.g., newspaper), various kinds of starch, and cellulose; colorants such as pigments and dyes; odor absorbers such as activated carbon and zeolite; flavors such as vanillin and dextrin; and various other additives such as plasticizers, oxidation inhibitors, antioxidants, weathering resistance improvers, ultraviolet absorbers, hydrolysis inhibitors, nucleating agents, lubricants, mold releases, water repellents, antimicrobials, slidability improvers, tackifiers, fillers, and chemicals. The sealant layer may contain only one additive or may contain two or more additives. The amount of the additive(s) can be set by those skilled in the art as appropriate depending on the intended use of the laminated article. Biodegradable additives are particularly preferred.

Examples of nucleating agents that can accelerate crystallization of the PHA resin component include pentaerythritol, orotic acid, aspartame, cyanuric acid, glycine, zinc phenylphosphonate, and boron nitride. Among these, pentaerythritol is preferred because it is particularly superior in the accelerating effect on crystallization of the polyhydroxyalkanoate resin component. The amount of the nucleating agent used is not limited to a particular range, but is preferably from 0.1 to 5 parts by weight, more preferably from 0.5 to 3 parts by weight, and even more preferably from 0.7 to 1.5 parts by weight per 100 parts by weight of the PHA resin component. One nucleating agent may be used alone, or two or more nucleating agents may be mixed. The mix proportions of the nucleating agents can be adjusted as appropriate depending on the intended use of the laminated article.

Examples of lubricants include behenamide, oleamide, erucamide, stearamide, palmitamide, A-stearyl behenamide, *N-*stearyl erucamide, ethylenebisstearamide, ethylenebisoleamide, ethylenebiserucamide, ethylenebislauramide, ethylenebiscapramide, p-phenylenebisstearamide, and a polycondensation product of ethylenediamine, stearic acid, and sebacic acid. Among these, behenamide and erucamide are preferred because they are particularly superior in the lubricating effect on the PHA resin component. The amount of the lubricant used is not limited to a particular range, but is preferably from 0.01 to 5 parts by weight, more preferably from 0.05 to 3 parts by weight, and even more preferably from 0.1 to 1.5 parts by weight per 100 parts by weight of the PHA resin component. One lubricant may be used alone, or two or more lubricants may be mixed. The mix proportions of the lubricants can be adjusted as appropriate depending on the intended use of the laminated article.

Examples of plasticizers include glycerin ester compounds, citric ester compounds, sebacic ester compounds, adipic ester compounds, polyether ester compounds, benzoic ester compounds, phthalic ester compounds, isosorbide ester compounds, polycaprolactone compounds, and dibasic ester compounds. Among these, glycerin ester compounds, citric ester compounds, sebacic ester compounds, and dibasic ester compounds are preferred because they are particularly superior in the plasticizing effect on the polyhydroxyalkanoate resin component. Examples of the glycerin ester compounds include glycerin diacetomonolaurate. Examples of the citric ester compounds include tributyl acetylcitrate. Examples of the sebacic ester compounds include dibutyl sebacate. Examples of the dibasic ester compounds include benzyl methyl diethylene glycol adipate. The amount of the plasticizer used is not limited to a particular range, but is preferably from 1 to 20 parts by weight, more preferably from 2 to 15 parts by weight, and even more preferably from 3 to 10 parts by weight per 100 parts by weight of the PHA resin component. One plasticizer may be used alone, or two or more plasticizers may be mixed. The mix proportions of the plasticizers can be adjusted as appropriate depending on the intended use of the laminated article.

The thickness of the sealant layer is not limited to a particular range, but is preferably from 5 to 300 µm and more preferably from 10 to 200 µm. When the thickness is in the above range, the sealant layer can have both high oil resistance and high crack resistance. Additionally, the sealant layer can be prevented from having defects such as pinholes, can be flexible enough, can have sufficient strength for practical use, and can effectively exhibit properties such as water resistance.

In one embodiment of the present invention, when the substrate layer is paper such as cup paper or paperboard which has a weight per square meter of 150 to 350 g/m², the thickness of the sealant layer is preferably from 15 to 100 µm and more preferably from 20 to 70 µm. Controlling the thickness of the sealant layer in the above range can ensure good secondary processing properties such as high punchability and high heat sealability. When the substrate layer is paper such as kraft paper which has a weight per square meter of 50 to 140 g/m², the thickness of the sealant layer is preferably from 10 to 50 µm, more preferably from 15 to 45 µm, and even more preferably from 20 to 40 µm. Controlling the thickness of the sealant layer in the above range can impart flexibility to the laminated article, enabling the laminated article to be transferred in a desired way in a packaging material-producing machine such as a bag making machine.

### (Gas Barrier Layer)

The laminated article according to the present invention may include a gas barrier layer. The gas barrier layer is not limited to a particular type and may be any layer that blocks gas permeation and has lower gas permeability than the substrate layer and the sealant layer. A conventionally known gas barrier layer can be used, and specific examples of the gas barrier layer include a metal foil such as an aluminum foil, a vapor-deposited film, a resin film, and a coating layer made of an inorganic substance. The gas barrier layer used may consist of only one type of layer or may include two or more types of layers placed on one another. The laminated article according to the present invention need not include any gas barrier layer.

The vapor-deposited film contains an inorganic material and may be made only of the inorganic material. Examples of the inorganic material include metals and inorganic oxides. Specific examples include, but are not limited to, aluminum, aluminum oxide, silicon oxides (such as silicon monoxide, silicon dioxide, and silicon oxynitride), cerium oxide, calcium oxide, and diamond-like carbon. One of these materials may be used alone, or two or more thereof may be used in combination. In terms of the adhesion after vapor deposition, the vapor-deposited film is preferably a vapor-deposited metal film, a vapor-deposited metal oxide film, or a vapor-deposited silicon oxide film and particularly preferably a vapor-deposited aluminum film or a vapor-deposited silicon oxide film.

The thickness of the vapor-deposited film is not limited to a particular range. In terms of productivity, handleability, visual appearance etc., the thickness of the vapor-deposited film is preferably from 5 to 100 nm and more preferably from 5 to 60 nm. When the thickness of the vapor-deposited film is 5 nm or more, the vapor-deposited layer is less likely to have defects and has high gas barrier performance. When the thickness of the vapor-deposited film is 100 nm or less, the cost for vapor deposition is low, and the vapor-deposited layer has a good visual appearance without conspicuous coloring.

Examples of the resin film forming the gas barrier layer include a polyvinyl alcohol film, a film of a polyvinyl alcohol derivative such as carboxy-modified polyvinyl alcohol, sulfonated polyvinyl alcohol, or ethylene-modified polyvinyl alcohol, an ethylene-vinyl alcohol copolymer film, a polyglycolic acid film, and a film of polyolefin such as polyethylene or polypropylene.

Examples of the inorganic substance forming the gas barrier layer include talc, clay, kaolin, montmorillonite, and vermiculite plate-like crystals.

The gas barrier layer preferably includes at least one selected from the group consisting of a metal foil, a vapor-deposited metal film, a vapor-deposited metal oxide film, a vapor-deposited silicon oxide film, a polyvinyl alcohol film, and an ethylene-vinyl alcohol copolymer film and more preferably includes at least one selected from the group consisting of a metal foil, a vapor-deposited metal film, a vapor-deposited metal oxide film, and a vapor-deposited silicon oxide film. The thickness of the gas barrier layer can be chosen as appropriate in view of the desired level of gas barrier performance.

### (Method for Forming Sealant Layer)

The sealant layer may be a resin layer formed by a PHA resin component-containing resin film that is prepared in advance and pressure-bonded under heating to the substrate layer or the gas barrier layer by a thermal lamination process. Alternatively, the sealant layer may be a PHA resin component-containing resin layer formed on the surface of the substrate layer or the gas barrier layer by a later-described extrusion lamination process or coating process. To further enhance the oil resistance and crack resistance of the sealant layer, the thermal lamination process or extrusion lamination process is preferred.

### (Method for Producing PHA Resin Component-Containing Resin Film)

The PHA resin component-containing resin film can be produced by any of various known molding methods such as T-die extrusion molding, blown film molding, and calender molding. The details of molding conditions can be set as appropriate. For example, in blown film molding or T-die extrusion molding, the set temperature of the cylinder is preferably from 100 to 160°C, and the set temperatures of the adapter and the die are preferably from 160 to 170°C.

### (Method for Forming Sealant Layer by Extrusion Lamination Process)

The sealant layer according to the present invention can be formed by an extrusion lamination process. Specifically, the sealant layer can be formed by extruding a molten resin material from a die, pressure-bonding the extruded resin material to the surface of a target film (substrate layer or gas barrier layer) while cooling the resin material by means of a cooling roll, and separating the resin material from the cooling roll immediately after the pressure-bonding. The substrate layer may be subjected in advance to a surface treatment such as corona treatment, flame treatment, or anchor coat treatment. One of these surface treatments may be performed alone, or two or more surface treatments may be used in combination.

The heating temperature in the extrusion lamination is preferably from 5 to 30°C above the highest melting peak temperature in differential scanning calorimetry of the PHA resin component so that some of the resin crystals may remain in the molten resin. By employing such a relatively low heating temperature, the reducing effect on neck-in and the improving effect on the separability from the cooling roll can be effectively achieved. In terms of ensuring high adhesion to the substrate layer or gas barrier layer, the heating temperature is preferably 160°C or higher and more preferably 165°C or higher.

The surface temperature of the cooling roll used in the extrusion lamination process is not limited to a particular range, and any surface temperature at which the lamination layer can be cooled and pressure-bonded may be chosen as appropriate. The surface temperature of the cooling roll is preferably from 35 to 70°C and more preferably from 40 to 60°C. When the surface temperature of the cooling roll is in the above range, crystallization of the PHA resin component is accelerated. As a result, sticking of the lamination layer to the cooling roll is reduced, and solidification of the lamination layer can be completed in a short time.

### (Method for Forming Sealant Layer by Coating Process)

The sealant layer according to the present invention can be formed by a coating process. Specifically, the sealant layer can be formed by applying a PHA resin component-containing coating liquid (preferably, an aqueous coating liquid) to one side of the substrate layer or gas barrier layer and then heating and drying the applied coating liquid.

The coating process is not limited to using a particular technique and can be carried out using any suitable known technique. For example, the coating process may include the steps of: (a) producing an aqueous coating liquid; (b) feeding the substrate layer or gas barrier layer; (c) applying the aqueous coating liquid to the substrate layer; and (d) drying a layer of the applied coating liquid into a solid layer.

The step (a) is not limited to using a particular technique and may be performed as follows. That is, the step (a) uses a microbially produced PHA resin and includes disrupting microbial cells containing the PHA resin in an aqueous dispersion of the microbial cells to separate the PHA resin from the cells.

A commonly used technique for collecting a PHA resin from microbial cells is to dissolve the PHA resin by using an organic solvent such as chloroform and precipitate and collect the PHA resin by using a solvent such as methanol or hexane in which the PHA resin is insoluble. However, this technique is economically disadvantageous because the PHA resin is not obtained in the form of fine particles and there is a need for an additional step of processing the PHA resin into fine particles. In contrast, the step of disrupting microbial cells containing a PHA resin in an aqueous dispersion of the microbial cells to separate the PHA resin from the cells can yield an aqueous dispersion of fine PHA resin particles which are made of the PHA resin produced in the microbial cells and a substantial portion of which have a sufficiently small particle size.

In the step of disrupting microbial cells containing a PHA resin in an aqueous dispersion of the cells to separate the PHA resin from the cells, it is preferable to perform the disruption and addition of an alkali simultaneously while stirring the microbial cells containing the PHA resin. This technique offers the following advantages: (i) the dispersion is prevented from having its viscosity increased by cellular components other than the PHA resin which leak out of the microbial cells; (ii) the prevention of viscosity increase of the cell dispersion allows for pH control, and continuous or intermittent addition of an alkali permits the process to proceed at a low alkali concentration; and (iii) molecular weight reduction of the PHA resin can be avoided, and the PHA resin of high purity can be separated. The cell dispersion preferably has a pH of 9 to 13.5 after the alkali addition. When the pH is 9 or higher, the PHA resin is easy to separate from the cells. When the pH is 13.5 or lower, decomposition of the PHA resin is likely to be avoided.

The microbial cell disruption may be accomplished using ultrasound or a device such as an emulsifying/dispersing machine, a high-pressure homogenizer, or a mill. Although the means for the microbial cell disruption is not limited to those mentioned below, the use of an emulsifying/dispersing machine such as Silverson Mixer (manufactured by Silverson), Clearmix (manufactured by M Technique Co., Ltd.), or Ebara Milder (manufactured by Ebara Corporation) is preferred in terms of dissolving out the PHA resin from the cells by the alkali treatment, efficiently disrupting nucleic acids which are a primary cause of viscosity increase, and thoroughly dispersing insoluble substances other than the PHA resin, such as cell walls, cell membranes, and insoluble proteins. The temperature during the microbial cell disruption and alkali addition is preferably from room temperature to 50°C. The temperature is preferably around room temperature since the PHA resin is likely to decompose if the temperature is higher than 50°C. Decreasing the temperature below room temperature requires a cooling operation and is not economical.

The dispersion resulting from the disruption and alkali treatment of the microbial cells is centrifuged to give a precipitate. The precipitate is washed with water and if necessary with methanol, and finally a suitable amount of water is added. In this manner, an aqueous coating liquid containing the PHA resin at a desired solids concentration can be obtained.

Preferably, the step described above is followed by the step of applying mechanical shear to the aqueous coating liquid to separate aggregated particles of the PHA resin from one another. The application of mechanical shear is preferred in terms of eliminating aggregates substantially and obtaining an aqueous coating liquid containing PHA resin particles that are uniform in particle size. The application of mechanical shear to the aqueous coating liquid can be accomplished, for example, by means such as a stirrer, a homogenizer, or ultrasound. At this point, the PHA resin particles are not so strongly aggregated; thus, the use of a stirrer equipped with a common stirring blade is preferred in terms of simplicity.

The solids concentration of the PHA resin in the aqueous coating liquid is preferably from 25 to 65 wt%, more preferably from 30 to 55 wt%, and particularly preferably from 35 to 50 wt%. When the solids concentration of the PHA resin in the aqueous coating liquid is in the above range, even application of the aqueous coating liquid can be achieved since the viscosity of the aqueous coating liquid is moderate. Another advantage is that a film of the applied liquid can have a required thickness and is less likely to suffer from defects.

In terms of ensuring both the PHA resin productivity and the coating uniformity, the average particle size of the PHA resin in the aqueous coating liquid is, for example, from 0.1 to 50 µm, preferably from 0.5 to 30 µm, and more preferably from 0.8 to 20 µm. When the average particle size is 0.1 µm or more, the PHA resin can easily be obtained either by microbial production or by chemical synthesis. When the average particle size is 50 µm or less, uneven application of the aqueous coating liquid can be avoided. The average particle size of the PHA resin in the aqueous coating liquid can be measured by adjusting an aqueous suspension containing the PHA resin to a given concentration and subjecting the suspension to analysis using a widely used particle size analyzer such as Microtrac particle size analyzer (FRA manufactured by Nikkiso Co., Ltd.). The average particle size can be determined as a particle size at which the cumulative percentage in a normal distribution curve reaches 50% of all the particles.

The aqueous coating liquid need not contain any emulsifier but preferably contains an emulsifier to stabilize the coating liquid. Examples of the emulsifier include: anionic surfactants such as sodium lauryl sulfate and sodium oleate; cationic surfactants such as lauryl trimethyl ammonium chloride; non-ionic surfactants such as glycerin fatty acid esters and sorbitan fatty acid esters; polyvinyl alcohol; polyvinyl alcohol derivatives such as carboxy-modified polyvinyl alcohol, sulfonated polyvinyl alcohol, and ethylene-modified polyvinyl alcohol; cellulose derivatives such as methyl cellulose, carboxymethyl cellulose, hydroxyethyl cellulose, and hydroxypropyl cellulose; starch; starch derivatives such as oxidized starch and etherified starch; and water-soluble polymers such as chitin, chitosan, casein, and gum arabic. One of these emulsifiers may be used alone, or two or more thereof may be used in combination. The amount of the emulsifier added is not limited to a particular range, but is preferably from 1 to 10 wt% based on the amount of solids of the PHA resin. When the amount of the emulsifier is 1 wt% or more, the stabilizing effect of the emulsifier is likely to be obtained. When the amount of the emulsifier is 10 wt% or less, physical property deterioration or coloring due to incorporation of an excess amount of emulsifier into the PHA resin can be avoided.

The emulsifier can be added to the aqueous dispersion after the water washing following the centrifugation subsequent to the disruption and alkali treatment of the microbial cells. When methanol washing is carried out, the emulsifier can be added after the methanol washing and before or after a suitable amount of water is added to adjust the solids concentration of the PHA resin.

The steps (b) and (c) are not limited to using particular techniques and can be performed using any techniques known in the art.

In one embodiment of the present invention, the heating temperature in the step (d) of drying a layer of the applied liquid into a solid layer is preferably from 155 to 180°C, more preferably from 160 to 175°C, and even more preferably from 165 to 170°C. By heating the layer of the applied liquid at such a temperature and thus drying it into a solid layer, the sealant layer having the melting characteristics as described above can be formed to obtain the laminated article.

The method for producing the laminated article may include the step (e) of winding up the laminated article after the step (d). The step (e) is not limited to using a particular technique and can be performed using any technique known in the art.

### (Adhesive Layer)

The laminated article according to the present embodiment may include an adhesive layer as an optional layer. The adhesive layer may be formed between the substrate layer and the gas barrier layer, between the gas barrier layer and the sealant layer, or between the substrate layer and the sealant layer.

The adhesive used to form the adhesive layer is not limited to a particular type, and any conventionally known adhesive can be used. The method for bonding two layers together via the adhesive layer is not limited to using a particular technique, and examples of the method include: dry lamination in which the two layers are bonded together by means of a two-part curable urethane adhesive; and non-solvent dry lamination in which the two layers are bonded together by means of a solventless adhesive.

### (Printed Layer and Protective Layer)

The laminated article according to the present embodiment may include a printed layer as an optional layer. In the case where the laminated article includes a printed layer, the printed layer is preferably formed on the opposite side of the laminated article from the sealant layer. The printed layer may be formed on the surface of the substrate layer or the surface of the gas barrier layer. The printed layer may be located between the substrate layer and the sealant layer.

The printed layer is not limited to particular details and can be formed by a known printing method using a known printing ink. Examples of the printing method include gravure printing, offset printing, gravure offset printing, flexographic printing, and inkjet printing. The printing ink may be a solvent-based ink or an aqueous ink. The printed layer may consist of a single layer or a plurality of layers.

A protective layer may be formed on the printed layer to protect the printed layer. The material of the protective layer can be selected from known materials. For example, a solvent-based or aqueous lacquer containing a resin and an additive can be used.

### (Uses)

The laminated article according to the present embodiment can be used to form a molded article. The molded article may be the laminated article itself or may be one produced by processing the laminated article into a given shape or structure. The molded article is not limited to a particular product and may be any product including the laminated article. Examples of the molded article include paper, a film, a sheet, a tube, a plate, a rod, a packaging material (e.g., a bag), a container (e.g., a bottle), and a part. In terms of addressing marine pollution, the molded article is preferably a packaging material, a container, or a lid.

The laminated article according to the present embodiment has high crack resistance and resists being cracked when folded. Thus, the laminated article can be suitably used to form a molded article having a folded portion. Examples of such a molded article include a packaging material having a folded portion, a container (e.g., a cup or tray) having a folded portion, and a lid having a folded portion.

The molded article may be produced by secondary processing in which different portions of the sealant layer are bonded together by heat sealing. Examples of such a molded article include, but are not limited to: packaging bags such as a side seal pack, a three side seal pack, a pillow pack, and a standing pouch; and containers such as a cup. The molded article is suitable for use as a packaging container or material in various fields such as food industry, cosmetic industry, electronic industry, medical industry, and pharmaceutical industry.

The molded article, which includes a sealant layer formed on one side of a substrate and having high adhesion to the substrate and high heat resistance, is particularly suitable for use as a container for a hot substance. Examples of such a container include: a liquid container such as, in particular, a cup for a food or beverage such as instant noodle, instant soup, or coffee; and a tray used for a prepared food, boxed lunch, or microwavable food.

By virtue of having high oil resistance, the laminated article according to the present embodiment can be suitably used to form a molded article that contacts a food or beverage when used (examples of such a molded article include a cup for a food or beverage and a food tray).

In the case where the molded article includes the gas barrier layer between the substrate layer and the sealant layer, the molded article is particularly suitable for use as a packaging material for holding a product such as a dried food (e.g., instant noodle, nut, or dried fruit), any kind of solid seasoning, a chocolate, or tea leaf whose flavor or taste needs to be kept intact.

The secondary processing can be performed using any technique known in the art. For example, the secondary processing can be performed by means such as a bag-making machine or form-fill-seal machine. Alternatively, the secondary processing may be performed using a device such as a paper tray press molding machine, a paper cup molding machine, a punching machine, or a case former. In any of these processing machines, any known bonding technique can be used to obtain the molded article. An example of the bonding technique is ordinary heat sealing. Other examples include impulse sealing, ultrasonic sealing, highfrequency sealing, hot air sealing, and flame sealing. The heat sealing may be performed between the substrate layer and the sealant layer or between different portions of the sealant layer.

The heat sealing temperature at which heat sealing is performed to obtain the molded article depends on factors such as the bonding technique used, the thickness of the sealant layer, and the type of the layer to be bonded to the sealant layer. In the case where the substrate layer is paper, where different portions of the sealant layer are heat-sealed together by means of a heat sealing tester equipped with a sealing bar, and where the laminated article is heated from both sides in the heat sealing, the heat sealing temperature is typically from 150 to 200°C, preferably from 160 to 190°C, and more preferably from 170 to 180°C. When the heat sealing temperature is in the above range, leakage of the sealant material can be prevented during the heat sealing, and at the same time satisfactory bond strength can be achieved by the heat sealing.

In the case where the sealant layer of the laminated article is heat-sealed to paper serving as the substrate layer of the laminated article by means of a heat sealing tester equipped with a sealing bar and where the laminated article is heated from both sides in the heat sealing, the heat sealing temperature is typically from 160 to 220°C, preferably from 170 to 210°C, and more preferably from 180 to 200°C. When the heat sealing temperature is in the above range, leakage of the sealant material can be prevented during the heat sealing, and at the same time satisfactory bond strength can be achieved by the heat sealing.

The heat sealing pressure at which heat sealing is performed to obtain the molded article depends on the bonding technique used. In the case of using a heat sealing tester equipped with a sealing bar, the heat sealing pressure is typically 0.1 MPa or more and preferably 0.3 MPa or more. When the heat sealing pressure is equal to or higher than the above level, satisfactory bond strength can be achieved by the heat sealing.

The molded article according to the present embodiment may, for the purpose of physical property improvement, be combined with another molded article (such as a fiber, a yarn, a rope, a woven fabric, a knit, a non-woven fabric, paper, a film, a sheet, a tube, a plate, a rod, a container, a bag, a part, or a foam) made of a different material than the molded article of the present embodiment. The material of the other molded article is also preferably biodegradable.

In the following items, preferred aspects of the present disclosure are listed. The present invention is not limited to the following items.

### [Item 1]

A laminated article including at least:
a substrate layer; and
a sealant layer, wherein
the sealant layer is located on at least one outermost side of the laminated article,
the sealant layer is a resin layer containing a polyhydroxyalkanoate resin component, and
in differential scanning calorimetry of the polyhydroxyalkanoate resin component, a highest melting peak temperature is 130°C or higher, and a total crystalline melting enthalpy calculated from all melting peaks is in a range of 20 to 65 J/g.

### [Item 2]

The laminated article according to item 1, wherein the polyhydroxyalkanoate resin component is a mixture of at least two polyhydroxyalkanoate resins differing in crystalline melting enthalpy.

### [Item 3]

The laminated article according to item 1 or 2, wherein the polyhydroxyalkanoate resin component includes poly(3-hydroxybutyrate-co-3-hydroxyhexanoate).

### [Item 4]

The laminated article according to item 3, wherein the polyhydroxyalkanoate resin component includes two or more types of poly(3-hydroxybutyrate-co-3-hydroxyhexanoate) differing in 3-hydroxyhexanoate structural unit content.

### [Item 5]

The laminated article according to item 4, wherein the polyhydroxyalkanoate resin component is a mixture of poly(3-hydroxybutyrate-co-3-hydroxyhexanoate) (A) having a 3-hydroxyhexanoate structural unit content of 1 to 6 mol% and poly(3-hydroxybutyrate-co-3-hydroxyhexanoate) (B) having a 3-hydroxyhexanoate structural unit content of 24 mol% or more.

### [Item 6]

The laminated article according to item 5, wherein a proportion of the poly(3-hydroxybutyrate-co-3-hydroxyhexanoate) (A) is from 50 to 80 wt% and a proportion of the poly(3-hydroxybutyrate-co-3-hydroxyhexanoate) (B) is from 20 to 50 wt% in 100 wt% of the mixture.

### [Item 7]

The laminated article according to any one of items 1 to 6, further including a gas barrier layer between the substrate layer and the sealant layer.

### [Item 8]

The laminated article according to any one of items 1 to 7, wherein the substrate layer is a biodegradable layer.

### [Item 9]

The laminated article according to item 8, wherein the substrate layer is paper.

### [Item 10]

The laminated article according to any one of items 1 to 9, including a printed layer on a side opposite from the sealant layer.

### [Item 11]

The laminated article according to any one of items 1 to 10, including a printed layer between the substrate layer and the sealant layer.

### [Item 12]

A packaging material including the laminated article according to any one of items 1 to 11.

### [Item 13]

The packaging material according to item 12, including a region where different portions of the sealant layer are heat-sealed together.

### [Item 14]

A container including the laminated article according to any one of items 1 to 11.

### [Item 15]

The container according to item 14, including a region where different portions of the sealant layer are heat-sealed together.

### [Item 16]

A lid including the laminated article according to any one of items 1 to 11.

### [Item 17]

A method for producing the laminated article according to any one of items 1 to 11 by an extrusion lamination process or a thermal lamination process.

### Examples

Hereinafter, the present invention will be specifically described based on examples. The technical scope of the present invention is not limited by the examples given below.

Raw materials used to form sealant layers in Examples and Comparative Examples are listed below.

### [Polyhydroxyalkanoate (PHA) Resins]

P3HB3HH-1: P3HB3HH (average content ratio 3HB/3HH = 97/3 (mol%/mol%), weight-average molecular weight = 60 × 10⁴ g/mol): this resin was produced according to Example 2 of WO 2019/142845.
P3HB3HH-2: P3HB3HH (average content ratio 3HB/3HH = 94/6 (mol%/mol%), weight-average molecular weight = 40 × 10⁴ g/mol): this resin was produced according to a method descried in Example 1 of WO 2019/142845.
P3HB3HH-3: P3HB3HH (average content ratio 3HB/3HH = 94/6 (mol%/mol%), weight-average molecular weight = 60 × 10⁴ g/mol): this resin was produced according to a method described in Example 1 of WO 2019/142845.
P3HB3HH-4: P3HB3HH (average content ratio 3HB/3HH = 72/28 (mol%/mol%), weight-average molecular weight = 60 × 10⁴ g/mol): this resin was produced according to a method described in Example 9 of WO 2019/142845.
P3HB3HH-5: P3HB3HH (average content ratio 3HB/3HH = 72/28 (mol%/mol%), weight-average molecular weight = 100 × 10⁴ g/mol): this resin was produced according to a method described in Example 9 of WO 2019/142845.

The average content ratio (3HB/comonomer) shown in Table 1 for the case where a mixture of two or more resins was used as the PHA resin component is an average value calculated from the values of the average content ratio 3HB/comonomer in the resins and the proportions by weight of the resins.

### [Additives]

Additive-1: Pentaerythritol (Neulizer P manufactured by Mitsubishi Chemical Corporation)
Additive-2: Behenamide (BNT-22H manufactured by Nippon Fine Chemical Co., Ltd.)

The following will describe evaluation methods carried out in Examples and Comparative Examples.

### [Measurement of Melting Peak Temperature and Crystalline Melting Enthalpy in Differential Scanning Calorimetry]

Each of the PHA resin components obtained in Examples and Comparative Examples was subjected to differential scanning calorimetry which used a differential scanning calorimeter (DSC 25 manufactured by TA Instruments) and in which about 2 mg of the PHA resin component was heated from -30 to 180°C at a temperature increase rate of 10°C/min. In the DSC curve obtained by the differential scanning calorimetry, the highest of temperatures at which melting peaks were detected was determined. Additionally, in the DSC curve, baselines observed before the start of melting and after the end of melting were connected by a straight line, and a total quantity of heat calculated as the area of the melting zone surrounded by the straight line and the DSC curve was determined as the total crystalline melting enthalpy. The DSC curve obtained for the PHA resin component of Example 6 is shown as a measurement example in FIG. 1.

### [Method for Evaluating Crack Resistance of Sealant Layer]

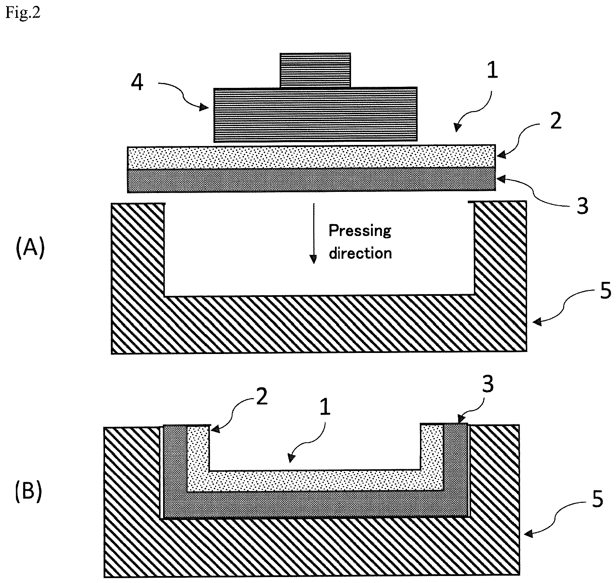

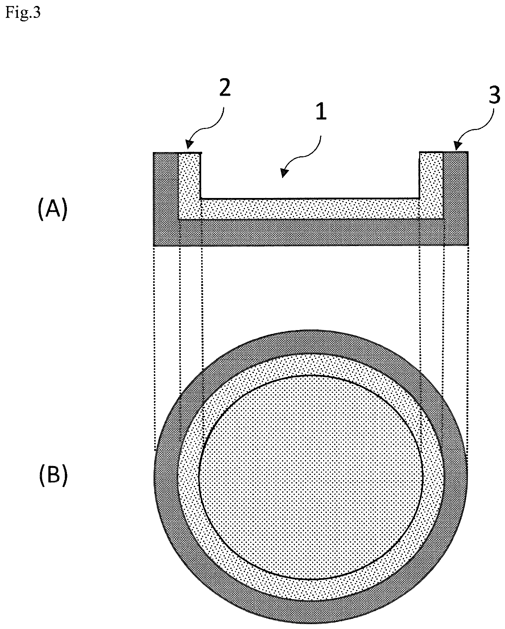

Each of the laminated articles obtained in Examples and Comparative Examples and made up of a PHA resin component-containing sealant layer and a paper substrate layer was punched into a circular piece with a diameter of 66 mm. A hand press machine including male and female molds, which is as shown in FIG. 2, was used to perform draw forming of the circular piece of the laminated article in such a way that the sealant layer of the laminated article was in contact with the female mold. Thus, a molded article in the shape of a 5-mm-deep circular dish as shown in FIG. 3 was produced.

Edible salad oil was applied to the sealant layer in a circumferential curved portion of the circular dish-shaped molded article, and the paper substrate side opposite from the sealant layer was illuminated with light to visually examine how much the oil seeped into the paper. Ratings were made according to the following criteria.

### <Rating Criteria>

Excellent: No oil stain appeared for 3 hours after application of the oil.
Good: No oil stain appeared for 10 minutes after application of the oil, but an oil stain was observed 3 hours after application of the oil.
Poor: An oil stain appeared in 10 minutes after application of the oil.

### [Method for Evaluating Oil Resistance of Sealant Layer]

Each of the PHA resin component-containing films obtained in Examples and Comparative Examples was cut into a piece with a width of 100 mm and a length of 150 mm. This film piece was immersed in Kit test liquid No. 12 (a liquid mixture of toluene and n-heptane at a volume ratio of 45/55) for 24 hours, after which the weight of the film piece was measured. The weight measured before the immersion was subtracted from the weight measured after the immersion, and the difference was divided by the weight measured before the immersion to calculate a percentage increase in weight. Ratings were made according to the following criteria.

### <Rating Criteria>

Excellent: The percentage increase in weight was less than 10%.
Good: The percentage increase in weight was from 10% to less than 20%.
Poor: The percentage increase in weight was 20% or more.

### (Example 1)

One hundred parts by weight of a polyhydroxyalkanoate resin component composed of 75 wt% P3HB3HH-1 and 25 wt% P3HB3HH-4 was dry-blended (the resin component in a non-molten state was mixed) with 1 part by weight of Additive-1 and 0.5 parts by weight of Additive-2. After that, the mixture was melted, kneaded, and extruded into a strand by a twin-screw extruder, and the strand was crystallized and solidified by passing it through a water bath heated to 40°C. The strand was then cut by a pelletizer to prepare PHA resin component-containing pellets for forming a sealant layer.

The pellets obtained as above were placed into a single-screw extruder (Laboplasto Mill 20C 200 manufactured by Toyo Seiki Seisaku-sho, Ltd.) equipped with a T-die having a horizontal width of 150 mm and a lip opening width of 0.25 mm. The cylinder temperature was set to 140 to 160°C, and the T-die temperature was set to 170°C. The pellets were extruded as a layer from the extruder onto one side of separately fed cup paper having a weight per square meter of 200 g/m². The extruded layer and the cup paper were pressed between a metal roll and a rubber roll (roll diameter = 100 mm) whose temperatures were controlled to 60°C, and the cup paper with the extruded layer was taken up. In this manner, a laminated article made up of a 30-µm-thick sealant layer and a paper substrate layer was produced. The same process was performed, except that cup paper was not fed, and thus a PHA resin component-containing film with a thickness of 30 µm was produced.

The pellets obtained as above were used to measure the melting peak temperature and crystalline melting enthalpy in differential scanning calorimetry. The laminated article and the film were used to evaluate the crack resistance and oil resistance of the sealant layer. The results are shown in Table 2.

### (Examples 2 to 6 and Comparative Examples 1 to 3)

PHA resin component-containing pellets for forming sealant layers, laminated articles, and films were made in the same manner as those of Example 1, except that the raw materials and their proportions were changed as shown in Table 1. Evaluation procedures were performed in the same manner as in Example 1, and the results are shown in Table 2.

### (Comparative Example 4)

One hundred parts by weight of P3HB3HH-5 was dry-blended with 1 part by weight of Additive-1 and 0.5 parts by weight of Additive-2. The mixture was melted, kneaded, and extruded into a strand by a twin-screw extruder, and the strand was crystallized and solidified by passing it through a water bath heated to 60°C. The strand was then cut by a pelletizer to prepare PHA resin component-containing pellets for forming a sealant layer.

The pellets obtained as above were placed into a single-screw extruder (Laboplasto Mill 20C 200 manufactured by Toyo Seiki Seisaku-sho, Ltd.) equipped with a T-die having a horizontal width of 150 mm and a lip opening width of 0.25 mm. The cylinder temperature was set to 50 to 70°C, and the T-die temperature was set to 80°C. The pellets were extruded as a layer from the extruder onto one side of separately fed cup paper having a weight per square meter of 200 g/m². The extruded layer and the cup paper were pressed between a metal roll and a rubber roll (roll diameter = 100 mm) whose temperatures were controlled to 60°C, and the cup paper with the extruded layer was taken up. In this manner, a laminated article made up of a 30-µm-thick sealant layer and a paper substrate layer was produced. The same process was performed, except that cup paper was not fed, and thus a PHA resin component-containing film with a thickness of 30 µm was produced.

The pellets obtained as above were used to measure the melting peak temperature and crystalline melting enthalpy in differential scanning calorimetry. The laminated article and the film were used to evaluate the crack resistance and oil resistance of the sealant layer. The results are shown in Table 2.

**[Table 1]**

| | Polyhydroxyalkanoate resins | | | | | | Additives | |
|---|---|---|---|---|---|---|---|---|
| | Proportions (wt%) | | | | | Average content ratio 3HB/Comonomer | Amounts (parts by weight)* | |
| | P3HB3HH-1 | P3HB3HH-2 | P3HB3HH-3 | P3HB3HH-4 | P3HB3HH-5 | | Additive-1 | Additive-2 |
| Ex. 1 | 75 | | | 25 | | 91/9 | 1 | 0.5 |
| Ex. 2 | 35 | 40 | | 25 | | 89/11 | 1 | 0.5 |
| Ex. 3 | 45 | | 20 | 35 | | 88/12 | 1 | 0.5 |
| Ex. 4 | 65 | | | 35 | | 88/12 | 1 | 0.5 |
| Ex. 5 | 55 | | | 45 | | 86/14 | 1 | 0.5 |
| Ex. 6 | | 55 | | | 45 | 84/16 | 1 | 0.5 |
| Comp. 1 | 85 | | | 15 | | 93/7 | 1 | 0.5 |
| Comp. 2 | 100 | | | | | 97/3 | 1 | 0.5 |
| Comp. 3 | | | 100 | | | 94/6 | 1 | 0.5 |
| Comp. 4 | | | | | 100 | 72/28 | 1 | 0.5 |

| | | | | | | | | |
|---|---|---|---|---|---|---|---|---|
| * Parts by weight per 100 parts by weight of the total resin amount | | | | | | | | |

**[Table 2]**

| | Highest melting peak temperature °C | Total crystalline melting enthalpy J/g | Crack resistance | Oil resistance |
|---|---|---|---|---|
| Ex. 1 | 151 | 64 | Good | Excellent |
| Ex. 2 | 152 | 63 | Good | Excellent |
| Ex. 3 | 152 | 64 | Excellent | Excellent |
| Ex. 4 | 153 | 58 | Excellent | Excellent |
| Ex. 5 | 156 | 54 | Excellent | Good |
| Ex. 6 | 144 | 34 | Excellent | Good |
| Comp. 1 | 149 | 68 | Poor | Excellent |
| Comp. 2 | 152 | 72 | Poor | Excellent |
| Comp. 3 | 142 | 68 | Poor | Excellent |
| Comp. 4 | 50 | 11 | Excellent | Poor |

Table 2 reveals that the PHA resin component-containing sealant layers obtained in Examples were satisfactory in crack resistance and had satisfactory oil resistance as demonstrated by a small value of the percentage increase in weight caused by immersion in the kit test liquid. In Comparative Examples 1 to 3, the PHA resin components contained in the sealant layers exhibited a total crystalline melting enthalpy as high as 68 J/g or more, and the sealant layers had insufficient crack resistance. In Comparative Example 4, where the highest melting peak temperature was low, the total crystalline melting enthalpy was small, and the amount of the crystalline component was extremely small, the sealant layer was found to have high crack resistance but have low oil resistance.

### Reference Signs List

- 1: laminated article
- 2: paper substrate layer
- 3: sealant layer
- 4: male mold
- 5: female mold

## Claims

1. A laminated article comprising at least:
a substrate layer; and
a sealant layer, wherein
the sealant layer is located on at least one outermost side of the laminated article,
the sealant layer is a resin layer containing a polyhydroxyalkanoate resin component, and
in differential scanning calorimetry of the polyhydroxyalkanoate resin component, a highest melting peak temperature is 130°C or higher, and a total crystalline melting enthalpy calculated from all melting peaks is in a range of 20 to 65 J/g.

2. The laminated article according to claim 1, wherein the polyhydroxyalkanoate resin component is a mixture of at least two polyhydroxyalkanoate resins differing in crystalline melting enthalpy.

3. The laminated article according to claim 1 or 2, wherein the polyhydroxyalkanoate resin component comprises poly(3-hydroxybutyrate-co-3-hydroxyhexanoate).

4. The laminated article according to claim 3, wherein the polyhydroxyalkanoate resin component comprises two or more types of poly(3-hydroxybutyrate-co-3-hydroxyhexanoate) differing in 3-hydroxyhexanoate structural unit content.

5. The laminated article according to claim 4, wherein the polyhydroxyalkanoate resin component is a mixture of poly(3-hydroxybutyrate-co-3-hydroxyhexanoate) (A) having a 3-hydroxyhexanoate structural unit content of 1 to 6 mol% and poly(3-hydroxybutyrate-co-3-hydroxyhexanoate) (B) having a 3-hydroxyhexanoate structural unit content of 24 mol% or more.

6. The laminated article according to claim 5, wherein a proportion of the poly(3-hydroxybutyrate-co-3-hydroxyhexanoate) (A) is from 50 to 80 wt% and a proportion of the poly(3-hydroxybutyrate-co-3-hydroxyhexanoate) (B) is from 20 to 50 wt% in 100 wt% of the mixture.

7. The laminated article according to claim 1 or 2, further comprising a gas barrier layer between the substrate layer and the sealant layer.

8. The laminated article according to claim 1 or 2, wherein the substrate layer is a biodegradable layer.

9. The laminated article according to claim 8, wherein the substrate layer is paper.

10. The laminated article according to claim 1 or 2, comprising a printed layer on a side opposite from the sealant layer.

11. The laminated article according to claim 1 or 2, comprising a printed layer between the substrate layer and the sealant layer.

12. A packaging material comprising the laminated article according to claim 1 or 2.

13. The packaging material according to claim 12, comprising a region where different portions of the sealant layer are heat-sealed together.

14. A container comprising the laminated article according to claim 1 or 2.

15. The container according to claim 14, comprising a region where different portions of the sealant layer are heat-sealed together.

16. A lid comprising the laminated article according to claim 1 or 2.

17. A method for producing the laminated article according to claim 1 or 2 by an extrusion lamination process or a thermal lamination process.
